Europäisches Patentamt

European Patent Office

Office européen des brevets

(19)

(11) Numéro de publication: **0 046 429**
**B1**

(12) **FASCICULE DE BREVET EUROPEEN**

(45) Date de publication du fascicule du brevet:
**10.04.85**

(21) Numéro de dépôt: **81401276.1**

(22) Date de dépôt: **07.08.81**

(51) Int. Cl.⁴: **G 21 C 19/20**

(54) **Installation et procédé de manutention des assemblages d'un réacteur nucléaire à neutrons rapides.**

(30) Priorité: **14.08.80 FR 8017961**

(43) Date de publication de la demande:
**24.02.82 Bulletin 82/8**

(45) Mention de la délivrance du brevet:
**10.04.85 Bulletin 85/15**

(84) Etats contractants désignés:
**DE GB IT**

(56) Documents cités:
**FR - A - 1 525 102**
**FR - A - 2 116 204**
**FR - A - 2 154 277**
**FR - A - 2 168 199**
**FR - A - 2 235 462**
**US - A - 2 961 393**

**ENERGIE NUCLEAIRE, vol 13, no. 3, mai-juin 1971
PARIS (FR) E. BENOIST et al.: "La Centrale Phenix.
Manutention des éléments combustibles et
manutentions spéciales dans le réacteur", pages
196-205**
**NUCLEAR ENERGY, vol. 19, no. 6, décembre 1980
LONDRES (GB) E. EDMONDS et al.: "Irradiated fuel
cave at Dounreay prototype fast reactor", pages
439-447**

(73) Titulaire: **COMMISSARIAT A L'ENERGIE ATOMIQUE
Etablissement de Caractère Scientifique Technique et
Industriel, B.P. 510, F-75752 Paris Cedex 15 (FR)**

(72) Inventeur: **Aubert, Michel, Chemin de Sainte Roustagne,
F-04100 Manosque (FR)**
Inventeur: **Renaux, Charley, "Les Extrées",
F-13490 Jouques (FR)**

(74) Mandataire: **Mongrédien, André et al, c/o
BREVATOME 25, rue de Ponthieu, F-75008 Paris (FR)**

## Description

L'invention concerne un réacteur nucléaire à neutrons rapides comportant un cœur situé dans une cuve à axe vertical et constitué par un ensemble d'assemblages combustibles et fertiles positionnés dans une grille de support, une dalle horizontale surmontant la cuve, une installation de manutention des assemblages comprenant un grand bouchon tournant coaxial au cœur dans la dalle et un petit bouchon tournant dans le grand bouchon tournant et excentré par rapport à ce dernier, et un pot de manutention permettant d'évacuer les assemblages hors de la cuve, le grand bouchon tournant comportant un bras de manutention des assemblages entre le cœur et le pot de manutention.

Le cœur d'un réacteur nucléaire à neutrons rapides est constitué par des assemblages qui se présentent sous la forme de boîtiers allongés contenant un faisceau d'aiguilles gainées renfermant de la matière fissile ou fertile. Ces boîtiers comportent, à leur extrémité supérieure, une tête de préhension qui permet de les soulever et de les transférer. A leur partie inférieure, ils comportent un pied permettant de les positionner dans le cœur du réacteur parmi les assemblages voisins en les engageant dans une grille de support horizontale.

On connaît déjà un réacteur nucléaire à neutrons rapides correspondant au préambule de la revendication 1 (document FR-A-2 116 204). Les documents US-A-2 961 393 et FR-A-2 235 462 sont également utiles pour l'intelligence de l'invention.

Le réacteur nucléaire du document FR-A-2 116 204 comprend deux bouchons tournants de manutention des assemblages combustibles: un bouchon principal rotatif centré par rapport au cœur du réacteur portant un bras extensible de manutention et de déplacement des assemblages et un bouchon interne, excentré par rapport au cœur et de diamètre inférieur à celui du cœur, qui supporte un couvercle de cœur faisant saillie latéralement par rapport à lui. Un pot de manutention des assemblages est monté à côté du cœur. La rotation du bouchon interne assure le dégagement d'une partie du cœur tandis que celle du grand bouchon, combinée avec le déploiement du bras extensible permet le déplacement des assemblages contenus dans les divers canaux du cœur et leur transport jusqu'au pot de manutention.

Cependant, un tel réacteur conduit à un diamètre de cuve important. Par conséquent, le coût d'une telle cuve, en particulier le coût de l'acier inoxydable nécessaire pour la réaliser, est élevé.

La présente invention a pour but de remédier à ces inconvénients en créant un réacteur nucléaire à neutrons rapides tel qu'il est caractérisé dans la revendication 1 et en proposant un procédé de chargement et un procédé de déchargement des assemblages combustibles et fertiles d'un réacteur nucléaire à neutrons rapides, tel qu'il est caractérisé dans les revendications 2 et 3. Un tel réacteur nucléaire a un grand bouchon tournant dont le diamètre est plus faible que celui des réacteurs nucléaires à neutrons rapides actuellement connus. Par suite, on peut réduire le diamètre de la cuve, ce qui conduit à une économie de matières premières et donc à un prix de revient moins élevé du réacteur.

D'autres caractéristiques et avantages de l'invention apparaîtront plus clairement à la lecture de la description qui suit, faite à titre purement illustratif et nullement limitatif, en référence aux dessins annexés, sur lesquels:
- la fig. 1 représente une vue en coupe d'un réacteur nucléaire à neutrons rapides comportant une installation de manutention des assemblages conforme à l'invention;
- la fig. 2 représente une vue en coupe du réacteur nucléaire représenté sur la fig. 1, montrant le transfert d'un assemblage de la zone périphérique du cœur vers le pot de transfert au moyen du bras de manutention monté sur le grand bouchon tournant;
- la fig. 3 représente une vue en coupe du réacteur nucléaire représenté sur la fig. 1 montrant le transfert d'un assemblage de la zone centrale du cœur à la zone périphérique du cœur au moyen du ringard monté sur le petit bouchon tournant.

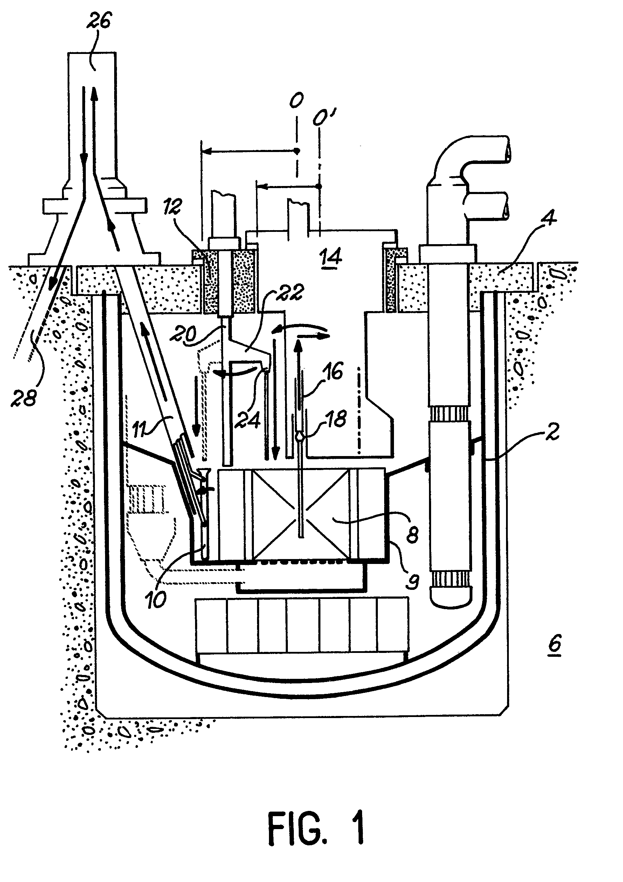

On a représenté sur la fig. 1 une vue en coupe d'un réacteur nucléaire à neutrons rapides comportant une installation de manutention conforme à la présente invention. Ce réacteur nucléaire se compose d'une cuve principale 2 à axe vertical suspendue à une dalle horizontale 4 et remplie d'un métal liquide de refroidissement, généralement du sodium. Le niveau du sodium liquide est surmonté par une couche d'un gaz inerte, habituellement de l'argon. La dalle horizontale 4 repose sur une enceinte de béton 6 à parois épaisses. Le cœur 8 du réacteur nucléaire, disposé à l'intérieur d'une cuve supplémentaire ou cuve interne 9, délimitant dans la cuve principale deux régions séparées, est immergé dans le sodium liquide et constitué essentiellement par des assemblages combustibles et fertiles. Chaque assemblage comporte à sa partie supérieure une tête de manutention permettant de l'extraire du cœur 8, puis de le transférer dans un pot de manutention 10 disposé à la périphérie du cœur. Ce pot 10 est lui-même susceptible de se déplacer sur une rampe oblique 11 plongeant à l'intérieur de la cuve 2 et traversant la dalle supérieure 4. Un pot de ce type est décrit dans le brevet FR-A-2 147 777.

La dalle horizontale 4 comporte une ouverture circulaire dans laquelle est monté un ensemble de deux bouchons tournants, un grand bouchon tournant 12 de centre 0, et un petit bouchon tournant 14 de centre 0', excentrés l'un par rapport à l'autre. Conformément à l'invention, le petit bouchon 14 comporte un ringard 16 de manutention. Ce ringard comporte à son extrémité inférieure une pince de préhension 18 apte à venir saisir un assemblage du cœur 8.

Le bras de manutention 20 dont est équipé le grand bouchon tournant 12, est constitué par un corps vertical traversant le grand bouchon tournant, et par une potence horizontale 22 terminée par une pince de préhension 24 apte à venir saisir un assemblage du cœur 8. Un bras de manutention de ce type est par exemple décrit et revendiqué dans le FR-A-1 569 728.

Après avoir été placé dans le pot 10, l'assemblage est déplacé le long de la rampe inclinée 11 pour être sorti de la cuve 2 à l'extérieur de la dalle 4 et être amené dans une hotte pivotante 26 qui communique avec une seconde rampe oblique 28.

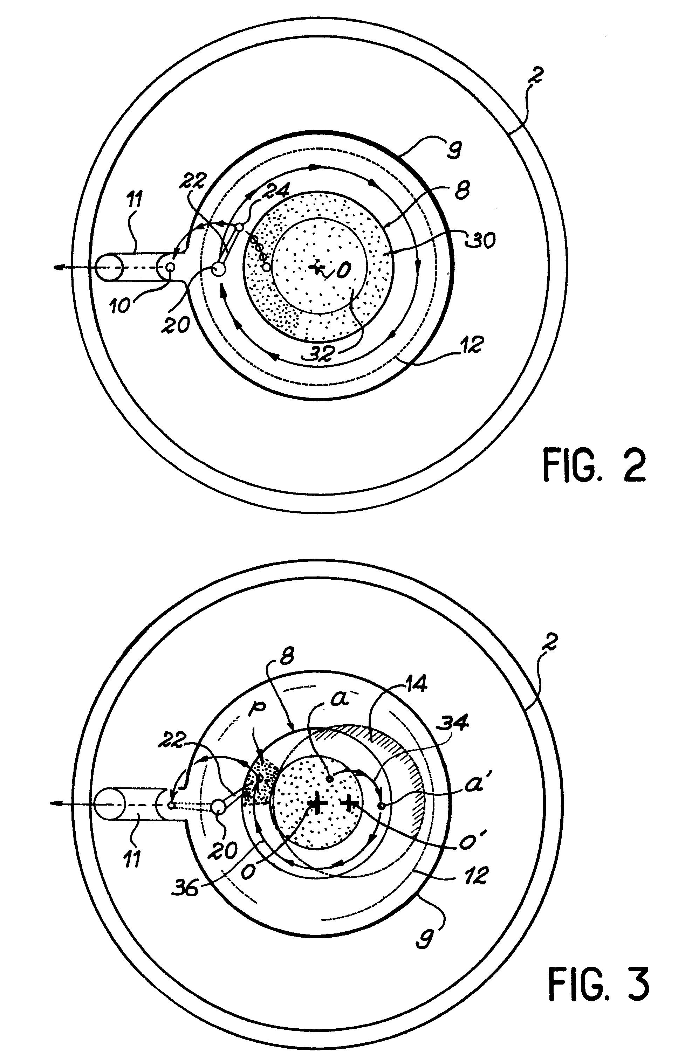

On a représenté sur la fig. 2 une vue en coupe du réacteur nucléaire représenté sur la fig. 1 montrant le transfert d'un assemblage de la zone périphérique du cœur vers le pot 10. On reconnaît sur cette figure la cuve principale 2, la cuve interne 9, le bras de manutention 20 avec sa potence horizontale 22, le pot 10 et la rampe inclinée 11, le cœur 8.

Si l'on désigne par 1 la distance qui sépare l'axe de rotation vertical du bras de manutention 20 de l'axe vertical de la pince de manutention 24, on comprend que la zone à l'intérieur de laquelle un assemblage du cœur peut être atteint au moyen de la pince 24 terminant le bras de manutention est une couronne dont le centre est celui du grand bouchon tournant; et dont la largeur est égale à 21, c'est-à-dire deux fois la longueur de la potence horizontale du bras de manutention. Cette couronne détermine sur le cœur une zone 30, dite zone périphérique, à l'intérieur de laquelle un assemblage peut être atteint directement au moyen du bras de manutention. L'extraction d'un assemblage irradié se trouvant dans cette zone s'effectue en une seule opération au moyen du bras de manutention. Une rotation convenable du grand bouchon tournant 12, suivie d'une rotation du bras de manutention, permet d'amener la pince de préhension 24 au-dessus de l'assemblage à extraire. L'assemblage est alors transféré dans le pot 10, puis il est évacué d'une manière connue hors de la cuve 2 du réacteur nucléaire.

Le reste du cœur 8, c'est-à-dire la zone du cœur qui ne fait pas partie de la zone périphérique 30, est appelé zone centrale 32. Les assemblages situés dans cette zone centrale ne peuvent pas être atteints directement au moyen du bras de manutention 20. L'évacuation d'un assemblage irradié situé dans la zone centrale 32 s'effectue, conformément à l'invention, de la manière suivante:

– on crée dans la zone périphérique 30 un poste de reprise P, s'il n'existe au préalable, en évacuant un ou plusieurs assemblages de la zone périphérique du cœur au moyen du bras 20;

– on transfère au moyen d'un ringard situé sur le petit bouchon tournant ou installé lors de l'arrêt du réacteur, à la place d'un mécanisme de barre de commande, les assemblages situés dans la zone centrale du cœur, jusqu'au poste de reprise P.

L'évacuation d'un assemblage combustible par le procédé de l'invention a été illustrée sur la fig. 3. L'assemblage a est situé dans la zone centrale 32 du cœur. Une rotation convenable du petit bouchon 14 ayant amené le ringard 16 (voir fig. 1) au-dessus de l'assemblage a, ce dernier est extrait du cœur. Une rotation du petit bouchon 14 suivant la flèche 34 amène l'assemblage a dans la position a'. Une rotation du grand bouchon suivant la flèche 36 l'amène ensuite au-dessus du poste de reprise P créé dans la zone périphérique 30. Il y est alors déposé. Une rotation convenable du grand bouchon 12 permet d'amener la pince de préhension 24 du bras 20 au-dessus du poste de reprise P. L'assemblage a positionné dans le poste de reprise P est alors repris, comme précédemment, par le bras 20 puis transféré dans le pot 10. Il est alors évacué de façon classique hors de la cuve du réacteur nucléaire.

Une fraction des assemblages peut être extraite du cœur du réacteur nucléaire directement au moyen du bras de manutention 20. On évite ainsi de passer par l'intermédiaire du poste de reprise. Cependant, afin que l'ensemble des assemblages irradiés puisse être évacué, la présence du ringard sur le petit bouchon tournant 14 est nécessaire pour une fraction des assemblages du cœur 8.

Afin d'illustrer plus concrètement la réduction du diamètre du grand bouchon tournant permise par l'invention, on donne ci-après deux exemples chiffrés de réalisation pour un cœur de référence donné.

Exemple I

Selon un premier mode de réalisation, la longueur de la potence horizontale 22 du bras de manutention est de 1476 mm, le rayon du petit bouchon tournant de 3276 mm et l'excentricité entre les deux bouchons de 900 mm. Dans ce cas, le grand bouchon tournant, outre le fait d'être coaxial au cœur, doit avoir un rayon de 4726 mm.

Ce rayon du grand bouchon tournant de 4726 mm est à comparer avec celui d'un réacteur, ayant le même cœur de référence, dont la manutention des assemblages est effectuée uniquement au moyen d'un ou deux ringards implantés sur le petit bouchon tournant de rayon 3561 mm et d'excentricité, par rapport au grand bouchon tournant de 1185 mm. Dans ce cas le rayon du grand bouchon tournant doit être de 5296 mm, bien que son axe soit excentré par rapport à celui du cœur. On constate donc que ce rayon a été réduit de 570 mm.

Avec cette solution, 92% des assemblages du cœur peuvent être atteints au moyen du ringard, les 8% restants étant accessibles directement par le bras.

Exemple II

Selon un deuxième exemple de réalisation, la longueur de la potence 22 est portée à 2706 mm, les rayons du petit bouchon tournant (3561 mm) et du grand bouchon tournant (4726 mm), ainsi que leur excentricité (1185 mm) étant identiques à l'exemple I. Dans ce cas seuls 9% des assemblages exigent un transfert préalable du ringard au poste de reprise, 91% des assemblages étant accessibles directement avec le bras. On constate donc que la réduction du diamètre du grand bouchon tournant est obtenue au prix d'une complication minime dans la manipulation des assemblages combustibles et fertiles.

## Revendications

1. Réacteur nucléaire à neutrons rapides comportant un cœur (8) situé dans une cuve (2) à axe vertical et constitué par un ensemble d'assemblages combustibles et fertiles positionnés dans une grille de support, une dalle horizontale (4) surmontant la cuve, une installation de manutention des assemblages comprenant un grand bouchon tournant (12), coaxial au cœur, dans la dalle (4) et un petit bouchon tournant (14) dans le grand bouchon tournant (12) et excentré par rapport à ce dernier, et un pot de manutention (10) permettant d'évacuer les assemblages hors de la cuve (2), le grand bouchon tournant comportant un bras de manutention (20) des assemblages entre le cœur et le pot de manutention (10), caractérisé en ce que le bras de manutention (20) ne permet d'atteindre qu'une fraction des assemblages et en ce que le petit bouchon tournant (14) comporte un ringard de manutention (16) et que la fraction restante des assemblages non accessibles au bras de manutention (20) et pouvant être atteinte par le ringard de manutention (16) est transférée dans un poste de reprise (P) positionné dans la grille de support, les assemblages de ladite fraction restante peuvent ensuite être repris par le bras de manutention (20) pour être déposé dans le pot de manutention (10).

2. Procédé de chargement des assemblages combustibles et fertiles d'un réacteur nucléaire à neutrons rapides, ce réacteur nucléaire comportant un cœur (8) situé dans une cuve (2) à axe vertical et constitué par un ensemble d'assemblages positionnés dans une grille de support, et une dalle horizontale (4) surmontant la cuve (2), un grand bouchon (12), coaxial au cœur, tournant dans la dalle (4), un petit bouchon tournant (14) dans le grand bouchon (12) et excentré par rapport à ce dernier, et un pot de manutention (10) permettant d'évacuer les assemblages hors de la cuve (2), le grand bouchon tournant comportant un bras de manutention (20) des assemblages entre le cœur (8) et le pot de manutention (10), caractérisé en ce que:

— on transfère une fraction des assemblages à charger du pot de manutention (10) dans un poste de reprise du cœur, au moyen du bras de manutention (20);

— on transfère les assemblages du poste de reprise dans le cœur (8) du réacteur au moyen d'un ringard (16) situé sur le petit bouchon tournant.

3. Procédé de déchargement des assemblages combustibles et fertiles d'un réacteur nucléaire à neutrons rapides, ce réacteur nucléaire comportant un cœur (8) situé dans une cuve (2) à axe vertical et constitué par un ensemble d'assemblages positionnés dans une grille de support et une dalle horizontale (4) surmontant la cuve (2), et un grand bouchon tournant (12) dans la dalle (4), un petit bouchon tournant (14) dans le grand bouchon (12) et un pot de manutention (10) permettant d'évacuer les assemblages hors de la cuve (2) et dans lequel on transfère directement les assemblages périphériques du cœur dans le pot de manutention (10) à l'aide d'un bras de manutention (20), caractérisé en ce que, préalablement au transfert des assemblages dans le pot de manutention:

— on crée, s'il n'existe pas au préalable, un poste de reprise en évacuant un ou plusieurs assemblages du cœur au moyen d'un bras de manutention (20) situé sur le grand bouchon tournant (12);

— on transfère les assemblages à décharger du cœur (8) dans le poste de reprise au moyen d'un ringard (16) situé sur le petit bouchon tournant (14);

— on transfère ces assemblages du poste de reprise dans le pot de manutention (10) au moyen du bras (20).

## Claims

1. Fast breeder reactor comprising a core (8) situated in a tank (2) having a vertical axis and constituted by a number of combustible and fertile assemblies position in a support grid, a horizontal slab (4) surmounting the tank, an assembly handling installation comprising a large turning stopper (12) coaxial with the core, in the slab (4) and a small turning stopper (14) in the large turning stopper (12) and eccentric in relation to this latter, and a handling pot (10) which makes it possible to remove the assemblies from the tank (2), the large turning stopper comprising an arm (20) for handling assemblies between the core and the handling pot (10), characterised in that the handling arm (20) makes it possible to reach only a fraction of the assemblies and in that the turning stopper (14) comprises a handling rod (16) and in that the remaining fraction of the assemblies which are not accessible to the handling arm (20) and which can be reached by the handling rod (16) are transferred to a take-over position (P) positioned in the support grid, the assemblies of the said remaining fraction being then capable of being taken over by the handling arm (20) in order to be deposited in the handling pot (10).

2. A method of loading combustible and fertile assemblies of a fast breeder reactor, this reactor comprising a core (8) situated in a tank (2) having a vertical axis and constituted by a number of assemblies positioned in a support grid and a horizontal slab (4) surmounting the tank (2), a large stopper (12) coaxial with the core turning in the slab (4), a small stopper (14) turning in the large stopper (12) and eccentric in respect thereof, and a handling pot (10) which makes it possible to remove the assemblies from the tank (2), the large turning stopper comprising an arm (20) for handling the assemblies between the core (8) and the handling pot (10), characterised in that:

– a fraction of the assemblies to be charged are transferred from the handling pot (10) to a core take-over position by means of a handling arm (20);

– the assemblies are transferred from the take-over position into the core (8) of the reactor by means of a rod (16) situated on the small turning stopper.

3. Method of unloading combustible and fertile assemblies from a fast breeder reactor, this reactor comprising a core (8) situated in a tank (2) having a vertical axis and constituted by a number of assemblies positioned in a support grid and a horizontal slab (4) surmounting the tank (2), and a large turning stopper (12) in the slab (4), a small turning stopper (14) in the large stopper (12) and a handling pot (10) which makes it possible to remove the assemblies from the tank (2) and into which the peripheral assemblies of the core are transferred directly into the handling pot (10) by means of a handling arm (20), characterised in that prior to transfer of the assemblies to the handling pot:

– there is created, if it does not exist beforehand, a take-over position, which is achieved by removing one or a plurality of assemblies from the core by means of a handling arm (20) situated on the large turning stopper (12);

– the assemblies to be discharged from the core (8) are transferred to the take-over position by means of a rod (16) situated on the small turning stopper (14);

– these assemblies are transferred from the take-over position to the handling pot (10) by means of the arm (20).

**Patentansprüche**

1. Kernreaktor mit schnellen Neutronen, umfassend einen Kern (8) der sich in einem Behälter (2) mit vertikaler Achse befindet und aus einer Gesamtheit von Brennelement- und Brutelementbündeln besteht, die in einem Trägergitter angeordnet sind, eine horizontale, den Behälter überbrückende Platte (4), eine Einrichtung zum Transportieren der Bündel, die in der Platte (4) einen grossen, drehbaren, zu dem Kern koaxialen Deckel (12) und in dem grossen, drehbaren Deckel (12) einen in Bezug auf diesen exzentrischen, kleinen, drehbaren Deckel (14) und einen Transportbehälter (10) umfasst, der das Entfernen der Bündel aus dem Behälter (2) ermöglicht, wobei der grosse, drehbare Deckel einen Arm (20) zum Transport der Bündel zwischen dem Kern und dem Transportbehälter (10) aufweist, dadurch gekennzeichnet, dass der Transportarm (20) nur einen Teil der Bündel erreichen kann, dass der kleine, drehbare Deckel (14) ein Räumeisen (16) zum Transport aufweist und dass der verbleibende Teil der Bündel, die für den Transportarm (20) unerreichbar sind und von dem Räumeisen zum Transportieren (16) erreicht werden können, zu einer in dem Trägergitter positionierten Aufnahmestelle (P) überführt wird, wobei die Bündel des verbleibenden Teils dann von dem Transportarm (20) erfassbar sind, um in dem Transportbehälter (10) abgesetzt zu werden.

2. Verfahren zum Einbringen von Brennelement- und Brutelementbündeln bei einem Kernreaktor mit schnellen Neutronen, der umfasst einen Kern (8), der sich in einem Behälter (2) mit vertikaler Achse befindet und aus einer Gesamtheit von Bündeln besteht, die in einem Trägergitter angeordnet sind, eine den Behälter (2) überbrückende, horizontale Platte (4), einen in der Platte (4) drehbaren, zu dem Kern koaxialen, grossen Deckel (12), einen in dem grossen Deckel (12) drehbaren und zu diesem exzentrischen, kleinen Deckel (14), und einen Transportbehälter (10), mit dem die Bündel ausserhalb des Behälters (2) bringbar sind, wobei der grosse, drehbare Deckel einen Arm (20) zum Transport der Bündel zwischen dem Kern (8) und dem Transportbehälter (10) aufweist, dadurch gekennzeichnet, dass

– ein Teil der einzubringenden Bündel von dem Transportbehälter (10) zu einer Aufnahmestelle des Kernes mittels des Transportarmes (20) übergeführt wird,

– die Bündel von der Aufnahmestelle in dem Kern (8) des Reaktors mittels eines Räumeisens (16) überführt werden, welche sich an dem kleinen, drehbaren Deckel befindet.

3. Verfahren zum Ausbringen von Brennelement- und Brutelementbündeln bei einem Kernreaktor mit schnellen Neutronen, der umfasst einen Kern (8), der sich in einem Behälter (2) mit vertikaler Achse befindet und aus einer Gesamtheit von Bündeln besteht, die in einem Trägergitter angeordnet sind, eine horizontale, den Behälter (2) überbrückende Platte (4), einen grossen, in der Platte (4) drehbaren Deckel (12), einen kleinen in dem grossen Deckel (12) drehbaren Deckel (14), sowie einen Transportbehälter (10), mit dem die Bündel ausserhalb des Behälters (2) gebracht werden können, wobei die sich am Umfang des Kernes befindenden Bündel unmittelbar mit Hilfe eines Transportarmes (20) in den Transportbehälter (10) übergeführt werden, dadurch gekennzeichnet, dass vor der Überführung der Bündel in den Transportbehälter

– eine Aufnahmestelle geschaffen wird, wenn diese nicht bereits vorhanden ist, indem ein oder mehrere Bündel aus dem Kern mittels des Transportarmes (20) entfernt werden, der sich an dem grossen, drehbaren Deckel (12) befindet,

– die aus dem Kern (8) auszubringenden Bündel an die Aufnahmestelle mittels eines Räumeisens (16) überführt werden, welches sich an dem kleinen, drehbaren Deckel (14) befindet,

– diese Bündel von der Aufnahmestelle mittels des Armes (20) in den Transportbehälter (10) gebracht werden.

FIG. 1

FIG. 2

FIG. 3